# DEMANDE DE BREVET EUROPEEN

(11) **EP 4 477 080 A1**
(43) Date de publication de la demande: **18.12.2024**
(21) Numéro de dépôt: 23020348.1
(22) Date de dépôt: 24.06.2023
(51) Int. Cl.: A01M 1/22, A01M 17/00, A01M 3/00

(54) **ÉRADICATEUR DE NUISIBLES**

(30) Priorité: 16.06.2023 FR 2306228
(71) Demandeur: Laisné, Ingrid, 94120 Fontenay-sous-Bois (FR)
(72) Inventeur: Laisné, Ingrid, 94120 Fontenay-sous-Bois (FR)

(57) **Abrégé**

Dispositif de salubrité, d'assainissement et de santé publique permettant de lutter contre les allergies aux acariens, permettant d'assainir l'atmosphère des textiles, notamment pour les personnes asthmatiques.

Cet usage, inventé par ma personne, s'ajoute au produit raquette anti-moustiques et insectes volants. Son usage n'est pas de smasher mais de lifter sur les surfaces pouvant contenir des insectes de petites tailles, voire microscopiques.

## Description

Smashlifter concerne un nouvel usage inédit, pour la raquette déjà existante électrocutant les moustiques, mouches et insectes volants.

La raquette envoie une décharge électrique et peut fonctionner par piles classiques AA, par piles rechargeables ou par port USB ou encore tout autre mode de chargement électrique.

Par un mouvement appuyé et répété en va-et-vient, identique à celui du repassage, la raquette électrocute les acariens, les poux, les lentes, les punaises de lit, les puces et tous autres nuisibles sur des surfaces, des textiles et des literies.

## Revendications

1. Dispositif hygiénique et sanitaire **caractérisé en ce que** la raquette détruit par des décharges électriques tous les nuisibles, par un mouvement appuyé et répété en va-et-vient, identique au mouvement que l'on réalise pour repasser, sur tous les textiles, vêtements, sacs, sacs à dos, canapés en tissus, plaids, housses, literies, couettes, matelas, édredons et oreillers, tous types de sols, tous types de tapis et moquettes, rideaux etc.

2. Dispositif hygiénique et sanitaire **caractérisé par** l'élimination des poux, des lentes, des acariens, des punaises de lit, des puces, des pucerons et de tous les insectes de petite taille, voire microscopiques.

3. Dispositif à utiliser sur les textiles, sur les surfaces et objets de la maison et non pas sur l'épiderme de l'être humain.
